Europäisches Patentamt

European Patent Office

Office européen des brevets

(11) Publication number: **0 337 630**
**A1**

(12) **EUROPEAN PATENT APPLICATION**

(21) Application number: 89303144.3

(22) Date of filing: 30.03.89

(51) Int. Cl.⁴: **G01M 3/04 , G01M 3/16**

(30) Priority: 07.04.88 JP 46292/88

(43) Date of publication of application:
**18.10.89 Bulletin 89/42**

(84) Designated Contracting States:
**AT BE CH DE ES FR GB GR IT LI LU NL SE**

(71) Applicant: JUNKOSHA CO. LTD.
**25-25, Miyasaka 2-chome
Setagaya-ku Tokyo 156(JP)**

(72) Inventor: **Akiba, Juji
1-27-202, 494 Shimo-kayama
Hitaka-machi Iruma-gun(JP)**
Inventor: **Kojima, Kazuyuki
1768 Sasai
Sayama-shi(JP)**

(74) Representative: **Foster, David Martyn et al
MATHISEN MACARA & CO. The Coach
House 6-8 Swakeleys Road
Ickenham Uxbridge UB10 8BZ(GB)**

(54) **Oil detection.**

(57) Oil leak detecting apparatus comprises an elongated oil sensor (20) supported within a protective tube (10). The tube is open at its bottom end (11) for ingress of the leaking oil and has vertical slots (12) for the same purpose. The sensor (20) is encased within a sheath of a non-woven fabric (30) made of oil absorbing material such as isotactic polypropylene. The sheath (30) increases the detection sensitivity of the sensor (20), physically supports it along its length against stress caused by wind or vibration, and protects it against damage caused by foreign particles or gases.

_Fig.1._

## OIL DETECTION

The invention relates to the detection of oil such as leakingoil.

Detection devices which detect the leakage of oil are known for installation within adjacent channels at sites where crude oil tanks, heavy oil tanks and oil transport pipelines are located. These devices are installed in close proximity to such tanks and lines in order to obtain early detection of any leaks.

Such oil leakage detection devices are usually equipped with a vertically oriented protective tube and a long oil leakage sensor which is accommodated inside this protective tube. The upper end of the oil leakage sensor is supported by a support in the upper end of the protective tube, and the sensor hangs down along the length of the protective tube. When oil leaks into one of the aforementioned channels, the oil enters the detection device through the bottom opening of the protective tube and through holes formed in the circumferential wall of the protective tube, and thus reaches the oil sensor whose electrical resistance then changes and an alarm is sounded. As a result, the oil leakage is detected.

In order to prevent water from entering the interior of oil leakage detection devices constructed as described above, the oil leakage sensors in such devices are encased within a water-repellant material. As a result, in the case of high-viscosity oil, it is difficult for the oil to penetrate into the detection device. Consequently, the detection sensitivity of such oil leakage detection devices is low.

Because the oil leakage sensor in such a device is ordinarily not supported by a protective tube along its entire length, but is normally supported only at one end of a protective tube, stress is generated in the oil sensor in cases where the oil leakage detection device is installed in locations where vibration occurs. As a result, the oil-sensing part inside the oil leakage sensor may degenerate so that there is a deterioration in the detection characteristics. The same problem is also encountered in cases where such an oil leakage detection device is installed in an outdoor location subject to strong winds, because the oil leakage sensor oscillates in the wind, resulting in the generation of stress.

In the case of the abovementioned oil leakage detection devices, sand or dirt, with a large specific gravity, may strike the oil leakage sensor and damage the sensor, especially in cases where the detection device is used in an outdoor location.

The invention aims to provide solutions to the above-mentioned problems.

According to the invention, there is provided oil detecting apparatus, comprising an elongated oil detecting sensor supported within a protective tube having an opening therein by which oil to be detected enters the tube, the sensor having a sheath of an oil absorbing material.

According to the invention, there is also provided oil leak detecting apparatus, comprising an elongated oil sensor supported within a protective tube which is adapted to be mounted substantially vertically in the vicinity where leaking oil is expected, the tube being open at its bottom end and having slots in its side wall, the sensor being encased inside the tube within a sheath of a non-woven fabric of an oil absorbing material.

Oil leak detection apparatus embodying the invention will now be described, by way of example only, with reference to the accompanying drawing in which:-

Fig. 1 is an elevational view, partly in cross-section, of the oil leak detection apparatus;

Fig. 2 is a cross-sectional view taken along line 2-2 of Fig. 1; and

Fig. 3 is a schematic view of the leak detecting sensor used in the apparatus.

The oil leak detecting apparatus to be more specifically described comprises an elongated oil leak detecting sensor supported within a protective tube, the tube being open at its bottom end and having vertical slots through its side wall, the sensor being encased inside the tube within a sheath of a non-woven fabric of an oil absorbing material. The oil absorbing material preferably is isotactic polypropylene. The sheath preferably is elliptical in cross-section and is oriented such that air gaps are present within the tube between the sheath and the vertical channels.

More specifically, the oil leakage detection apparatus is equipped with (a) a protective tube, and (b) an oil leakage sensor (i) which is supported at at least one end of the aforementioned protective tube, and (ii) which is installed along the length of the protective tube, an oil-absorbing material of a non-woven fabric being interposed between the oil leakage sensor and the protective tube.

Since the oil-absorbing material absorbs and retains leaking oil, oil can be supplied to the oil leakage sensor over a broad range and a long period of time. As a result, the detection sensitivity of the oil leakage sensor is increased.

In cases where vibration is applied to the oil leakage detection apparatus, or in cases where a strong wind blows against the apparatus, the oil leakage sensor is supported by the oil-absorbing material so that little stress is generated. As a result, deterioration of the detection characteristics is substantially prevented.

This oil-absorbing material also prevents the oil leakage sensor from being damaged by sand or dirt, which has a high specific gravity.

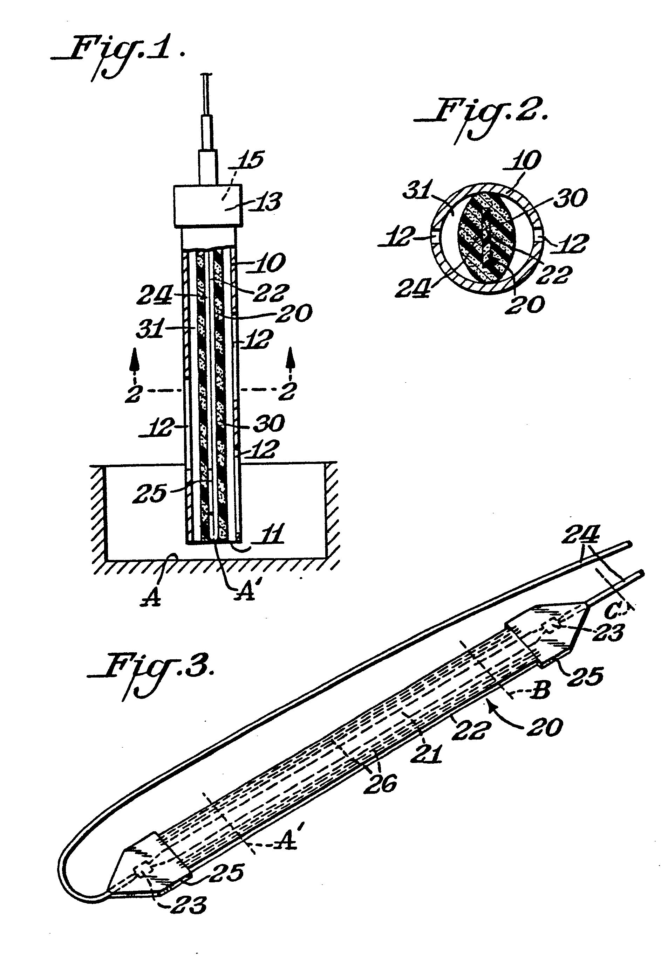

One example will be described with reference to Figs. 1-3.

As shown in Fig. 1, the oil leakage detection apparatus is equipped with a protective tube 10 which is supported vertically inside a channel A by a supporting mechanism, not shown in the Figure. This protective tube 10 has a bottom opening 11, and also has a plurality of slots 12 which are formed in the circumferential wall of the tube 10. The upper end of the protective tube 10 is formed by a slightly larger diameter moulded accommodating cap 13.

A long oil leakage sensor 20 is supported inside the protective tube 10. As shown in Fig. 3, this oil leakage sensor 20 has (a) a tape-form oil detecting sensor 21 formed by mixing a conductive substance such as carbon with a porous polytetrafluoroethylene resin, (b) a flat casing 22 consisting of a porous polytetrafluoroethylene resin, inside which the aforementioned oil detecting sensor 21 is sealed, (c) lead wires 24,24 which are connected by respective terminals 23,23 at both ends of the oil detecting sensor 21, and (d) flat moulded parts 25,25 consisting of a tetrafluoroethylene resin, which seal the terminals 23,23. Several reinforcing wires 26 are embedded in body 22.

The oil leakage sensor 20 is folded at the position indicated by broken line A′ in Fig. 3, and is accommodated inside the protective tube 10 with this fold located at the bottommost end. Both lead wires 24,24 of the oil leakage sensor 20 are led out upwardly from the moulded accommodating cap 13 at the top end of the protective tube 10. A portion of the oil leakage sensor 20 which includes one of the moulded parts 25, i.e. the portion of the sensor between broken lines B and C in Fig. 3, and the middle portion of one of the lead wires 24, which runs along this portion of the sensor, are embedded in an epoxy resin moulded part 15 inside the moulded cap 13 of the protective tube 10. As a result, the oil leakage sensor 20 is supported at the top end, and hangs downwardly.

An oil-absorbing material 30 is interposed between the oil leakage sensor 20 and the protective tube 10. This oil-absorbing material 30 is a non-woven spun-bonded fabric, preferably 100% isotactic polypropylene, which is insoluble in aromatic oils such as gasoline. An example of such a material is Tafuneru Oil Blotter, manufactured by Mitsui Sekiyu Kagaku R.R. of Japan. This oil-absorbing material 30 absorbs oil almost instantaneously, but absorbs almost no water, and has the elasticity of a non-woven fabric. This material is widely used to absorb oil in the case of oil spills at sea.

As shown in Fig. 1, the oil-absorbing material 30 is installed along the entire length of the oil leakage sensor 20 from the moulded part 15 downwardly. As shown in Fig. 2, the oil leakage sensor 20 is completely enveloped by this oil-absorbing material 30. The oil-absorbing material 30 is preferably elliptical in cross-section, and is in elastic contact with the interior circumference of the protective tube 10 at the ends of the major axis of the elliptical cross-sectional form, so that the oil-absorbing material 30 is supported inside the protective tube 10 by the resulting frictional force. Gaps 31 are formed between the interior circumferential surface of the protective tube 10 and the external surface of the oil-absorbing material 30 at the ends of the minor axis of material 30. These gaps 31 are adjacent the slots 12 formed in the protective tube 10, and connect with the bottom opening 11 of protective tube 10.

In operation, oil leaking from a tank flows into the channel A and enters the interior of the protective tube 10 through the bottom opening 11 and slots 12 of protective tube 10. The oil which has thus entered the tube 10 is first absorbed by the oil-absorbing material 30, and then reaches the oil leakage sensor 20. The oil permeates the body 22 of the sensor 20, and thus reaches the detecting sensor 21. As a result, the resistance of the detecting sensor 21 increases, and the oil leakage is detected by electronic means, not shown..

The oil-absorbing material 30 absorbs the leaking oil so that oil is supplied to a broad area of the oil leakage sensor 20. As a result, the detection sensitivity is significantly increased. The oil-absorbing material 30 retains the oil long enough for the oil to permeate to the oil leakage sensor 20, and this also contributes to the increased detection sensitivity.

In cases where vibration is applied to the oil leakage detection device, or cases where a strong wind blows against the device, the oil leakage sensor 20 is further supported by the oil-absorbing material 30 so that the sensor 20 does not move significantly. Accordingly, little stress is generated, and deterioration of the detection characteristics is prevented.

If sand or dirt, having a high specific gravity, should be blown inside the protective tube 10, this sand or dirt is blocked by the oil-absorbing material 30 so that it does not reach the oil leakage sensor 20 is prevented.

Because the oil leakage sensor 20 is covered by the oil-absorbing material 30, deterioration caused by corrosive gases can be prevented, so that the useful life of the detection apparatus is increased.

Apparatus embodying the invention is not restricted to the example described above. Various other configurations are possible. For example, it would also be possible to support the oil leakage sensor at the top end and also at the bottom end. It would also be possible to fill the entire space between the protective tube and the oil leakage sensor with the oil-absorbing material, so that no air gaps are present.

As described above, the apparatus makes it possible to increase the oil leakage detection sensitivity by means of an oil-absorbing material, and also makes it possible to prevent deterioration of the detection characteristics of the oil leakage sensor caused by vibration and to prevent damage caused by sand or dirt.

While the invention has been disclosed herein in connection with certain embodiments and detailed descriptions, it will be clear to one skilled in the art that modifications or variations of such details can be made without deviating from the gist of this invention, and such modifications or variations are considered to be within the scope of the claims hereinbelow.

## Claims

1. Oil detecting apparatus, comprising an elongated oil detecting sensor (20) supported within a protective tube (10) having an opening therein (11) by which oil to be detected enters the tube (10), characterised in that the sensor (20) has a sheath (30) of an oil absorbing material.

2. Apparatus according to claim 1, characterised in that the sheath (30) is made of a non-woven fabric.

3. Apparatus according to claim 1 or 2, characterised in that oil absorbing material (30) is isotactic polypropylene.

4. Apparatus according to any preceding claim, characterised in that the sensor (20) is supported within the tube (10) by the sheath (30).

5. Apparatus according to any preceding claim, characterised in that the tube (10) is adapted to be mounted substantially vertically in the vicinity where leaking oil is expected, and the opening (11) is in its bottom end, and by slots (12) through its side wall.

6. Apparatus according to any preceding claim, characterised in that the sheath (30) is elliptical in cross-section and arranged within the tube (10) so that air gaps (31) are present within and extending longitudinally along the tube (10) on each side of the sheath (30) and respectively between the sheath (30) and opposite portions of the wall of the tube (10).

*Fig.1.*

15
13
10
22
20
12
24
31
2
2
12
30
12
25
11
A
A'

*Fig.2.*

31
10
30
12
12
24
22
20

*Fig.3.*

24
C
23
25
B
20
22
21
26
A'
25
23

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN vol. 9, no. 163 (P-371)(1886), 9th July 1985; & JP - A - 60 40934 (FUJI DENKI SOUGOU KENKYUSHO K.K.) 04.03.1985 | 1 | G 01 M   3/04 G 01 M   3/16 |
| A | idem --- | 5 | |
| X | PATENT ABSTRACTS OF JAPAN vol. 10, no. 52 (P-432)(2109), 28th February 1986; & JP - A - 60 196638 (TATSUTA DENSEN K.K.) 05.10,1985 --- | 1 | |
| Y | PATENT ABSTRACTS OF JAPAN vol. 10, no. 198 (P476)(2254), 11th July 1986; & JP - A - 61 41153 (CANON INC.) 27.02.1986 --- | 2,3 | |
| Y | PATENT ABSTRACTS OF JAPAN vol. 11, no. 157 (M-590)(2604), 21st May 1987; & JP - A - 61 287 785 (RICOH CO LTD) 18.12.1986 --- | 2,3 | **TECHNICAL FIELDS SEARCHED (Int. Cl.4)** |
| Y | DE-A-3 441 924  (JUNKOSHA CO LTD) * page 15, lines 23-38 * --- | 3 | G 01 M   3/00 |
| A | US-A-4 319 232  (F.C. WESTPHAL et al.) * figure 2; column 5, lines 57-68; column 6 * --- | 1,2 | |
| A | FR-A-2 204 304  (B. PERREN) * pages 3,4 * --- | 1,3 | |
| A | GB-A-2 143 322  (THE VICTORIA UNIVERSITY OF MANCHESTER) * claim 3 * ----- | 2,3 | |

The present search report has been drawn up for all claims

| Place of search | Date of completion of the search | Examiner |
|---|---|---|
| BERLIN | 28-06-1989 | DIETRICH A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)